# EUROPÄISCHE PATENTANMELDUNG

(11) **EP 1 407 989 A1**
(43) Veröffentlichungstag der Anmeldung: **14.04.2004**
(21) Anmeldenummer: 03019479.9
(22) Anmeldetag: 28.08.2003
(51) Int. Cl.: B65G 43/10, B65G 15/24

(54) **Fördertechnische Anlage, insbesondere High-Speed-Strecke in Gepäcksortieranlagen**

(30) Priorität: 11.10.2002 DE 20215627 U
(71) Anmelder: SIEMENS AKTIENGESELLSCHAFT, 80333 München (DE)
(72) Erfinder: Brixius, Wolfgang, 91077 Neunkirchen A.Br. (DE); Gräfer, Dominik, 90427 Nürnberg (DE); Hoene, Albrecht, Dr., 91074 Herzogenaurach (DE)

(57) **Zusammenfassung**

Die Erfindung betrifft eine fördertechnische Anlage, insbesondere eine High-Speed-Strecke in Gepäcksortieranlagen auf Flughäfen, bestehend aus einer Mehrzahl angetriebener Förderer, die zu einer Förderstrecke zusammengestellt sind. Um bei einer solchen Anlage mit geringem Aufwand, kostengünstig und funktionssicher streuende Geschwindigkeiten und den dadurch entstehenden Rückstaueffekt mit den beschriebenen Nachteilen auszuschließen, wird erfindungsgemäß vorgeschlagen, die Einzelförderer (1 bis 6) modular auszubilden und antriebsmäßig zu einer mechanischen Einheit (7) miteinander zu koppeln.

## Beschreibung

Die Erfindung betrifft eine fördertechnische Anlage, insbesondere eine High-Speed-Strecke in Gepäcksortieranlagen auf Flughäfen, bestehend aus einer Mehrzahl angetriebener Einzelförderer, die hintereinander zu einer Förderstrecke aufgestellt sind.

Bei der Verwendung von ungeregelten Asynchronmotoren besteht grundsätzlich das Problem, dass die Drehzahl dieser Antriebe lastabhängig ist. Daraus ergibt sich beim Einsatz in fördertechnischen Anlagen der Nachteil, dass die Fördergeschwindigkeit abhängig ist vom Gewicht der beförderten Fördergüter. Hieraus wiederum ergibt sich der Nachteil, dass sich unterschiedlich schwere Fördergüter beim Übergang von Förderelement des einen Einzelförderers auf das des nächsten in ihrem gegenseitigen Abstand zueinander verändern. Da die Verschiebung der Fördergüter zueinander auch aufgrund des i.d.R. nicht bekannten Gewichtes nicht vorhersagbar ist, sind die Verschiebungen Unsicherheiten, die sich negativ auf die Anlagenverfügbarkeit auswirken.

Der beschriebene Effekt tritt insbesondere bei langen Förderstrecken auf, z.B. bei High-Speed-Strecken in Gepäcksortieranlagen auf Flughäfen. Solche High-Speed-Strecken transportieren Gepäck mit Geschwindigkeiten von 7 m/s und mehr und können beträchtliche Längen von mehreren hundert Metern annehmen. Schwere Gepäckstücke werden auf diese Weise von leichteren eingeholt, so dass es zu Kollisionen zwischen den langsam vorausfahrenden und den schneller hinterherfahrenden Gepäckstücken kommen kann. Der Effekt ist umso signifikanter je länger die Strecke und je größer die Gewichtsdifferenzen sind.

Es ist bekannt, folgende Methoden einzusetzen, um o.g. Nachteile zu vermeiden:
a) Drehzahlrückführung. Hierbei wird die Motordrehzahl oder die Bandgeschwindigkeit messtechnisch erfasst und Abweichungen von der Sollgröße werden ausgeregelt. Nachteilig ist der Mehraufwand für die Messtechnik und die Regler.
b) Verwendung von Servomaschinen. Hierbei werden Antriebe verwendet, bei denen die Kennlinie so steil ist, dass Drehzahldifferenzen vernachlässigbar sind. Nachteil dieser Lösung ist ein erhöhter Kostenaufwand.
c) Verwendung von Synchronmaschinen. Für die Ansteuerung von Synchronmaschinen muss der Polradwinkel, d.h. die Läuferposition bekannt sein. Der Vorteil der Synchronmaschinen liegt darin, dass die Drehzahl eben synchron zum Vorgabewert ist. Der Nachteil liegt in der Rückführung der Läuferposition, was dem Aufwand einer Drehzahlrückführung im Fall a) ähnelt.
d) Verwendung elektronisch kommutierter Gleichstrommaschinen. Hier gilt das unter c) Gesagte analog. Zur Kommutierung muss die Läuferposition bekannt sein.
e) In kleineren Einheiten, etwa bis zu 6, werden an sich eigenständige mechanische Förderermodule miteinander mit Übertrieben mechanisch gekoppelt. Hierdurch werden Drehzahlschwankungen grundsätzlich vermieden. Die mechanische Kopplung von individuellen Förderern zu einer Gruppe ist bisher bekannt bei der Crisbag-Technik (Crisplant) und wird dort angewendet bei Speicherbändern, mit einer maximalen Kopplungslänge von 6 Förderern. Die Geschwindigkeit ist hierbei langsam.

Der Erfindung liegt die Aufgabe zugrunde, eine fördertechnische Anlage, insbesondere eine High-Speed-Strecke in Gepäcksortieranlagen auf Flughäfen zu schaffen, die mit geringem Aufwand, kostengünstig und funktionssicher streuende Geschwindigkeiten und den dadurch entstehenden Rückstaueffekt mit den beschriebenen Nachteilen ausschließt.

Zur Lösung der Aufgabe wird erfindungsgemäß vorgeschlagen, die Einzelförderer modular auszubilden und antriebsmäßig zu einer mechanischen Einheit miteinander zu koppeln.
Im Gegensatz zu dem beim Stand der Technik bekannten unter 2e) beschriebenen Fall, wird erfindungsgemäß nicht nur ein kleiner Bereich bei niedriger Geschwindigkeit gekoppelt, sondern sehr lange Strecken werden geschaffen, die auch mit hoher Geschwindigkeit betrieben werden können.

Erfindungsgemäß bilden mindestens drei Einzelförderer, vorzugsweise mehr als zehn Einzelförderer eine mechanische Einheit, wobei in einer Ausgestaltung der Erfindung jede mechanische Einheit aus unmittelbar und mittelbar angetriebenen Einzelförderern gebildet sein kann. Unmittelbar angetrieben heißt hierbei, dass jeder dieser angetriebenen Einzelförderer einen eigenen Antriebsmotor aufweist, während beispielsweise der benachbarte Einzelförderer selbst keinen eigenen Motor besitzt, sondern von dem Motor des benachbarten Einzelförderers mit angetrieben wird. Wie viele der Einzelförderer unmittelbar angetrieben sind hängt von derer Länge und den zu transportierenden Lasten ab. Es hat sich gezeigt, dass vorteilhafterweise mindestens jeder dritte, vorzugsweise jeder zweite Einzelförderer direkt motorisch anzutreiben ist. Asynchronmotoren haben sich als Antriebsmotoren bewährt.

Nach einem weiteren Merkmal der Erfindung ist vorgesehen, dass vor und hinter jeder mechanischen Einheit als Beschleunigungs- und Verzögerungsstrecke dienende Übergabeförderer angeordnet sind. Diese Förderer sind ansich bekannt, sie beladen die mechanische Einheit aus der Vielzahl von Einzelförderern mit zu transportierendem vereinzelten Gut, beispielsweise Gepäckstücken, in vorgegebenen Abständen, die sich infolge der erfindungsgemäßen Lösung auf der gesamten Förderstrecke nicht mehr verändern können.

Die modularen Einzelförderer sind nach einer besonders günstigen Lösung der Erfindung mittels Übertriebriemen gekoppelt. Da jeder Einzelförderer als Modul ausgeführt ist und die entsprechenden Verbindungselemente (Riemenscheiben oder dergl.) trägt, können die Einzelförderer praktisch zu beliebig langen Förderstrecken am Einsatzort zusammengefügt werden. Es entsteht ein Baukastensystem, mit dem nicht nur die Herstellkosten reduzierbar sind, sondern auch die Montagezeiten deutlich verkürzt werden können.

Natürlich kann die Kopplung der Einzelförderer im Rahmen der Erfindung auch mittels Kettentrieben oder über Stirnradgetriebe erfolgen, womit das gleiche Ziel erreichbar ist. Bedeutsam dabei bleibt die Verwendung von modularen Bauteilen mit den vorstehend geschilderten Vorteilen.

Besonders vorteilhaft ist der Betrieb der aus modular ausgebildeten Einzelförderern antriebsmäßig mechanisch miteinander gekoppelten Einheit als High-Speed-Strecke in Gepäcksortieranlagen auf Flughäfen mit Geschwindigkeiten von gleich/größer 5 m/s.

Insgesamt ergeben sich durch die erfindungsgemäße Lösung gegenüber dem Stand der Technik eine große Anzahl von Vorteilen. So bleiben einmal eingestellte Abstände, die sich über die Zuführbänder einstellen lassen, während der gesamten Überfahrt über die gekoppelten Einzelförderer gleich. Die gesamte Massenträgheit hält die Geschwindigkeit konstant bzw. unterstützt deren Konstanz. Zur Massenträgheit zählen dabei alle Fördergüter, die sich gerade auf der gekoppelten Einheit befinden, alle Bänder, Getriebe, Riemen, Bänder und sonstige rotatorisch und translatorisch bewegte Massen. Der Einfluss schwerer Gepäckstücke wird sehr gering, da die Last über viele Antriebe verteilt wird.

Die Gesamtleistung der Antriebe kann auch besser z.B. für geschwindigkeitssteigernde Maßnahmen genützt werden. Das Wiederanlaufverhalten ist deutlich einfacher, da es sich logisch um ein Förderband handelt, dessen Antriebe synchron, auf gleiche Weise angesteuert werden. Hinzu kommt, dass die mechanische Kopplung mit Übertriebsriemen kostengünstig ist. Der Ausfall eines Antriebs kann leicht über die anderen kompensiert werden. Mit der erfindungsgemäßen Lösung sind beliebige Fördererlängen bei geringer Typenanzahl mit beschränkter Baulänge erreichbar. Die Sensorikausrüstung ist verringerbar, da ein langer Förderer weniger Sensorik(i.d.R. Lichtschranken) braucht, als viele kleine Förderer.

Die vorliegende Erfindung wird anhand der Zeichnung erläutert. Die schematische Darstellung zeigt in
- Figur 1: eine Förderstrecke mit ungekoppelten Förderern und in
- Figur 2: die als mechanische Einheit zusammengefasste Förderstrecke nach der Erfindung.

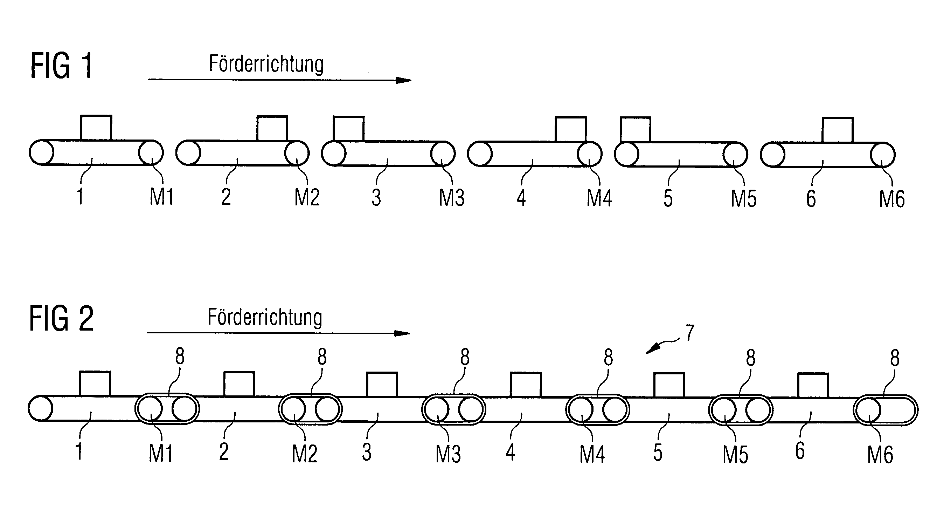

Im Vergleich der Figuren 1 und 2 ist zu erkennen, dass die Auswirkung der massenabhängigen Geschwindigkeitsunterschiede naturgemäß bei schnellen und langen Förderern größer als bei langsamen und kurzen ist. Während bei der ersten Variante mit ungekoppelten Förderern (Figur 1) die Abstände des Fördergutes zueinander schwanken, bleiben die Abstände im zweiten erfindungsgemäßen Fall (Figur 2) konstant. Die Antriebe bei der Erfindung gemäß Figur 2 werden in diesem Beispiel über Umrichter so angesteuert, dass eine sinnvolle Drehmomentenaufteilung zwischen den einzelnen Antrieben gewährleistet ist. Wie erkennbar, ist die resultierende Gesamtfördererlänge prinzipiell unbegrenzt, weil sie sich aus einer Anzahl kleinerer Förderermodule zusammengesetzt.

Da die Steuerung der Anlage die High-Speed-Strecke ohnehin als Block betrachtet, der im Rückstaufall komplett angehalten wird, entstehen durch die Kopplung der Einzelförderer keine Nachteile. Hingegen ergibt sich der Vorteil des deutlich schnelleren Restarts nach einer Störung.

## Patentansprüche

1. Fördertechnische Anlage, insbesondere High-Speed-Strecke in Gepäcksortieranlagen auf Flughäfen, bestehend aus einer Mehrzahl angetriebener Einzelförderer, die hintereinander zu einer Förderstrecke aufgestellt sind,
**dadurch gekennzeichnet, dass** die Einzelförderer (1 bis 6) modular ausgebildet und antriebsmäßig zu einer mechanischen Einheit (7) miteinander gekoppelt sind.

2. Fördertechnische Anlage nach Anspruch 1,
**dadurch gekennzeichnet, dass** mindestens drei Einzelförderer (1 bis 6), vorzugsweise mehr als zehn Einzelförderer eine mechanische Einheit (7) bilden.

3. Fördertechnische Anlage nach Anspruch 1 und 2,
**dadurch gekennzeichnet, dass** jede mechanische Einheit (7) aus unmittelbar (M1 bis M6) und mittelbar angetriebenen Einzelförderern (1 bis 6) gebildet ist.

4. Fördertechnische Anlage nach einem der Ansprüche 1 bis 3,
**dadurch gekennzeichnet, dass** mindestens jeder dritte, vorzugsweise jeder zweite Einzelförderer (1 bis 6) direkt motorisch (M1 bis M6) angetrieben ist.

5. Fördertechnische Anlage nach einem der Ansprüche 1 bis 4,
**dadurch gekennzeichnet, dass** die Einzelförderer (1 bis 6) mittels Asynchronmotoren angetrieben sind.

6. Fördertechnische Anlage nach Anspruch 1 bis 5,
**dadurch gekennzeichnet, dass** vor und hinter jeder mechanischen Einheit (7) als Beschleunigungs- und Verzögerungsstrecke dienende Übergabeförderer angeordnet sind.

7. Fördertechnische Anlage nach Anspruch 1 bis 6,
**dadurch gekennzeichnet, dass** die Kopplung der Einzelförderer (1 bis 6) mittels Übertriebriemen (8) erfolgt.

8. Fördertechnische Anlage nach einem der Ansprüche 1 bis 6,
**dadurch gekennzeichnet, dass** die Koppelung der Einzelförderer (1 bis 6) mittels Kettentrieben erfolgt.

9. Fördertechnische Anlage nach einem der Ansprüche 1 bis 6,
**dadurch gekennzeichnet, dass** die Koppelung der Einzelförderer (1 bis 6) über Stirnradgetriebe erfolgt.

10. Fördertechnische Anlage nach Anspruch 1 bis 9,
**dadurch gekennzeichnet, dass** die aus modular ausgebildeten Einzelförderern (1 bis 6) antriebsmäßig mechanisch miteinander gekoppelte Einheit (7) als High-Speed-Strecke in Gepäcksortieranlagen auf Flughäfen mit Geschwindigkeiten von gleich/größer 5 m/s betreibbar ist.
